# EUROPEAN PATENT SPECIFICATION

(11) **EP 3 022 498 B1**
(45) Date of publication and mention of the grant of the patent: **07.10.2020**
(21) Application number: 14739542.0
(22) Date of filing: 11.07.2014
(51) Int. Cl.: F24F 13/02, F16L 45/00

(54) **A DUCT MEMBER AND CLOSURE ASSEMBLY FOR A DUCT MEMBER**
LUFTLEITUNGSELEMENT UND VERSCHLUSSANORDNUNG FÜR EIN LUFTLEITUNGSELEMENT
ÉLÉMENT DE CONDUITE ET ENSEMBLE DE FERMETURE POUR UN ÉLÉMENT DE CONDUITE

(30) Priority: 16.07.2013 GB 201312654
(43) Date of publication of application: 25.05.2016
(73) Proprietor: Specialist Ventilation Services Limited, Annfield Plain Stanley Durham DH9 7YB (GB); Kent Tooling & Components Limited, Canterbury Kent, CT4 5SS (GB)
(72) Inventor: MCARTHUR, Andrew, Consett Durham DH8 0SL (GB); PERRIN, Richard John, Canterbury Kent CT4 5SS (GB)
(74) Representative: Murgitroyd & Company
(86) International application number: PCT/GB2014/052121
(87) International publication number: WO 2015/008038

(56) References cited:
- EP-A2- 1 329 661
- EP-A2- 2 241 839
- WO-A1-88/03244
- JP-A- 2001 116 342
- JP-A- 2005 307 579
- US-A1- 2010 180 509

## Description

The present invention relates generally to the field of airflow ducts, and more particularly to a duct member having a closable access and which is installable within an airflow duct system. Furthermore, the present invention relates to a duct member suitable for accessibly and operatively housing a damper, such as a smoke or fire damper.

### Introduction

Airflow ducts and ductwork, such as pipes, tubes, canals or conduits, are generally used in heating, ventilation and air conditioning (HVAC) to deliver and remove air from one location to another. The provided airflow may be utilized to, *inter alia,* supply air, return air and/or exhaust air.

Currently available ducts come in many shapes and sizes and may be made of a variety of materials. For example, galvanized mild steel is often used in fabricating ductwork and can be considered to be a common standard for airflow duct systems.

HVAC systems typically comprise many other components, such as smoke and/or fire dampers, which may be installed where the duct passes through a firewall or fire curtain. Smoke and/or fire dampers may be operated using manually operable mechanical mechanisms (e.g. fire dampers) or motors (e.g. smoke dampers). The mechanical mechanisms or motors are often referred to as actuators. A probe may be installed within the "run" (i.e. ductwork) of the duct that is coupled to the actuator, in order to detect, for example, smoke within the duct system and which has been extracted from a room, or which is being supplied from an Air Handling Unit (AHU) or elsewhere within the "run". For example, when a predetermined concentration of smoke is detected within the duct, the actuator automatically triggers a release and the smoke and/or fire damper is closed shut until it is reopened manually.

Fire dampers in particular are usually not triggered by any electrical powered system, such as an electrical motor (to minimize the risk of system failure due to loss of power), and may be mounted in either horizontal or vertical configurations. Vertically mounted fire dampers may be gravity operated while horizontal fire dampers may be spring powered. In either case, a fire damper typically comprises a fusible link that will fail at a specified temperature, therefore allowing the damper to be actuated under gravity or spring power and effectively seal the duct and consequently "starve" the fire of the required oxygen.

When installing or servicing the ductwork or any of the components within the ductwork, i.e. repairs, inspections or simply cleaning, access holes may be formed in the ductwork at various locations and for various purposes. After completing a service, clean, inspection or repair, the formed holes are closed again typically using simple patches. The procedure of forming (e.g. cut outs) and sealing (e.g. by welding, gluing, riveting etc.) access holes can be laborious and time consuming, and may increase the risk of causing leaks within the ductwork.

Alternatively, complicated duct access doors (e.g. hinged flaps, or clamping-type doors) may be used to cover the formed access holes utilizing, for example, bolts, hinges and/or spring bias mechanisms. A gasket may be provided around the periphery of the duct access door to seal the access hole. However, currently available hinged duct access doors require a considerable range of movement to allow full access to the interior of the duct. Also, the necessary hinge or pivot anchors may either be provided as integral part of the duct section, or may be permanently fixed (e.g. welded, screwed, riveted) to the duct section, in order to provide adequate operation of such duct access door.

EP 2 241 839 A2 discloses a duct component having an opening that is closable with a cover in the form of a single-piece jacket, the jacket having a fixed part and a free part, the fixed part being permanently attached to the duct member by spot or seam welds.

In order to optimize the spatial layout duct systems are usually arranged in very tight spaces (e.g. parallel to other piping works or in corners) and may be difficult to reach. Therefore, it may not be practically possible to utilize currently available hinged or pivoting access doors, because access to the interior ductwork will be restricted considerably. Also, the available clamping-type access doors utilize complicated clamping mechanisms that may only be used together with suitable access hole shapes of a limited size, restricting the accessibility of the duct considerably.

Accordingly, it is an object of the present invention to provide a duct member with resealable access irrespective of the available space and required dimensions of the access hole within the duct. In addition, it is a further object of the present invention to provide a re-usable "stand-alone" closure assembly adapted to close and seal access holes in a ductwork.

### Summary of the Invention

Preferred embodiments of the invention seek to overcome one or more of the above disadvantages of the prior art.

According to the present invention, there is provided a duct member as claimed in claim 1.

This provides the advantage of an accessible duct member, housing a damper, such as a smoke or fire damper, and allowing easy access to the damper installed within the duct member for operations such as servicing, cleaning and inspection. The detachable closure may be removed from the duct by moving the closure away from the access hole in a direction perpendicular to a longitudinal axis of the duct member, therefore, providing the advantage of a detachable closure that is operative in limited, obstructed or tight spaces.

In addition, the present invention provides the advantage of a detachable closure for a duct access hole that is adapted to operatively engage with, for example, a damper so as to form an airtight duct section including an operative damper unit installed within the passageway.

The detachable closure is adapted to seal said opening.

The saddle portion provides the advantage that the detachable closure can be fitted to any access hole in the ductworks. In particular, the saddle portion is adapted to simply fit around respective duct section to provide an "anchor" or "fixture" for the closure so there is no need for any structural adjustments to the duct or periphery of the access hole.

Advantageously, the fasteners may be latch members moveable between a closed position and an open position, and adapted to bias said closure and saddle portion towards each other when in said closed position. The closure comprises at least two fasteners, each adapted to fasten said closure to said tubular wall. This provides the advantage of an airtight seal between the closure and the outer wall of the duct, and in particular, between the direct metal to metal interface of the closure and the outer wall of the duct, because the biased closure and saddle portion provide a tight press-fit with the outer wall of the duct.

Advantageously, the latch member may further be adapted to provide a handle when in said open position. This provides the advantage of an improved ease of use when trying to operate and remove the closure from the access hole. Also, since the fastener may be transformed into the handle portion when unlocking the closure from the duct, there is no need for an additional external handle to move the closure.

Preferably, the inner surface profile of said closure may be matched to the outer surface profile of said tubular wall. Advantageously, the upstream end portion and said downstream end portion may be coupleable to corresponding end portions within an air duct system, providing the advantage of a duct member that is modular and easy to integrate within an airflow duct system.

Alternatively, the saddle portion may be permanently affixed to said tubular wall, providing additional strength to the engagement with the outer wall of the duct and prevent any undesired movement of the saddle portion with respect to the outer wall of the duct.

Preferably, the damper may be operatively mountable within said passageway of said tubular wall.

Mounting the damper on the detachable closure member provides the advantage that, when removing the closure from the access hole, the damper unit is removed with it, allowing it to be taken away for inspection and/or service and/or cleaning. This is particularly advantageous where the ductwork is located in very tight spaces (e.g. in a cluster of other pipework, conduits or cables) and difficult to reach.

This application also discloses a closure assembly for a duct system, comprising:
a closure member, adapted to close an opening in a tubular wall of a duct system, and
a saddle portion, matingly engageable with the tubular wall at a location opposite an opening of the tubular wall, and further adapted to lockably cooperate with said closure member.

This provides the advantage of a stand-alone closure assembly that can be used with any suitable ductwork. The closure assembly is particularly simple and inexpensive and highly adaptable to any available ductwork without significantly compromising its functionality and airtightness.

Advantageously, the closure member may further comprise at least one fastener adapted to lockably engage with said saddle portion, so as to bias said closure member and said saddle portion towards each other, when in engagement with a duct system. Even more advantageously, the closure member may further comprise at least two fastener adapted to lockably engage with said saddle portion, so as to bias said closure member and said saddle portion towards each other, when in engagement with a duct system.

Preferably, the saddle portion may further comprise a flange portion on a first and second end, each adapted to operatively engage with respective said at least one fastener or said at least two fasteners.

Preferably, the fastener may be a latch member moveable between a closed position, where said latch member is in engagement with said saddle portion, and an open position, where said latch member is not in engagement with said saddle portion. Even more preferably, the latch member may be further adapted to provide a handle.

Advantageously, the handle may be grippable with one hand when in said open position. This provides the advantage of an improved ease of use.

### Brief Description of the Drawings

Preferred embodiments of the present invention will now be described, by way of example only and not in any limitative sense, with reference to the accompanying drawings, in which:
**Figure 1** shows a front view of the duct member of a first embodiment of the present invention where the closure member is lockingly engaged with the saddle portion and the latch member are in a closed position or open position (dashed line) to act as a handle portion,
**Figure 2** shows a side view of the duct member and access hole as well as the saddle portion attached to the bottom of the duct member outer wall,
**Figure 3** shows a side view of the duct member of Figure 2 with the closure attached to the saddle portion so as to sealingly close the access hole,
**Figure 4** shows a front view of the duct member as shown in Figure 1, but with an alternative fastener mechanism,
**Figure 5** shows a side view of the duct member of Figure 4 with the closure attached to the saddle portion so as to sealingly close the access hole,
**Figure 6** shows a side view of the closure of Figure 5 disengaged from the saddle portion and the duct,
**Figure 7** shows a side view of the closure disengaged from the saddle portion and the duct,
**Figure 8** shows a (a) side view and (b) front view of the saddle portion disengaged from the duct member and closure.

### Description

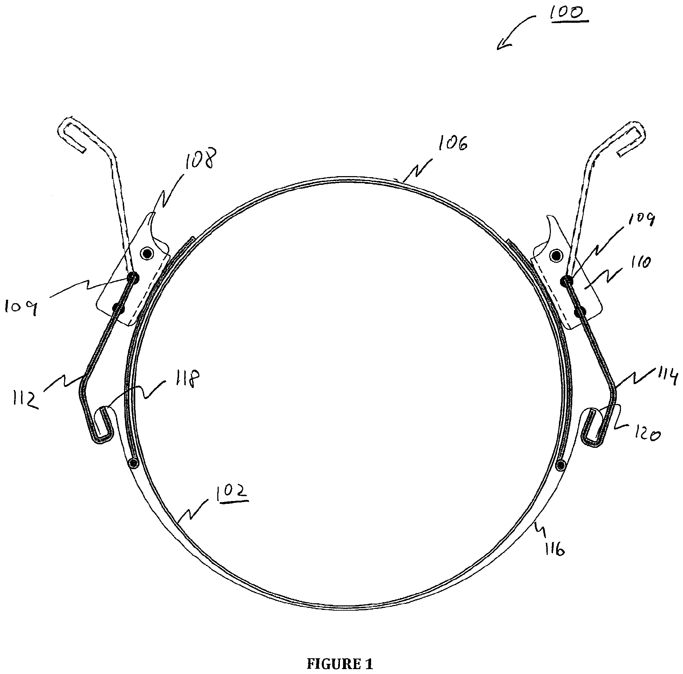

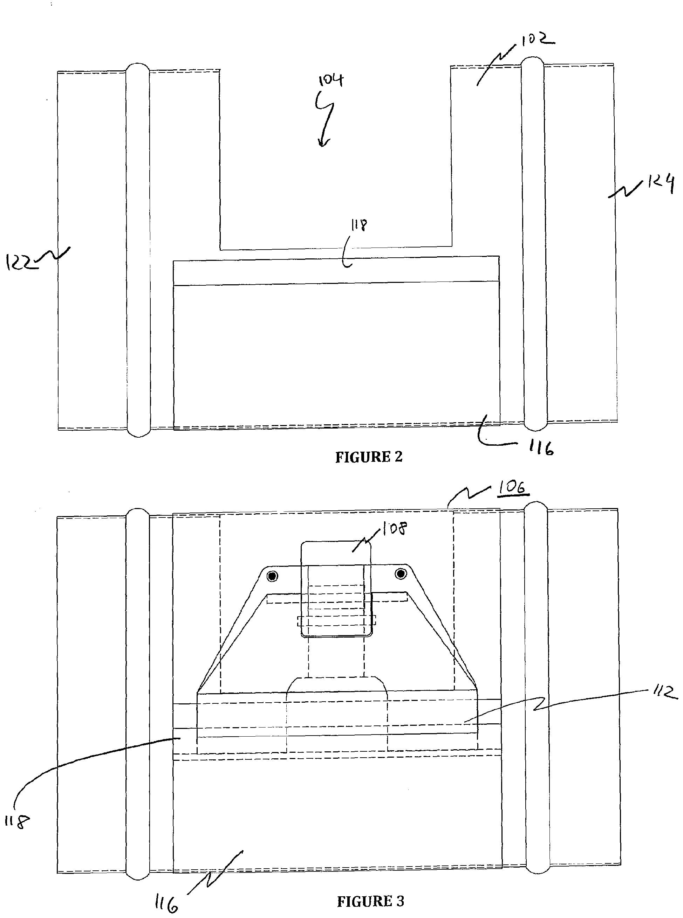

Referring to Figures 1 to 3, a first embodiment of the invention is shown in a front view along a longitudinal axis of the duct member 100. The duct member 100 comprises a duct 102 having a tubular wall, wherein a section of the tubular wall is cut out to provide an access hole or opening 104 (see Figure 2).

A detachable closure 106 is placed over the opening 104 so as to cover the opening 104 in the duct 102. Coupled to the closure 106 are two fasteners in the form of latch mechanisms 108 and 110 that are positioned on either side of the closure 106. Latch mechanisms 108 and 110, such as the ones shown in Figure 1 and suitable variations thereof, are commonly known in the art and its functionality will not be described in any further details.

A saddle portion 116, comprising flange portions 118 and 120 on either side of the saddle portion 116, is positioned opposite the opening 104 and the closure 106. The latch mechanisms 108 and 110 further comprise latch members 112 and 114, which are adapted to lockingly engage with the respective flange portions 118 and 120.

During use, latch mechanisms 108 and 110 are moved into an open position allowing latch members 112 and 114 to engage with respective flange portions 118 and 120. The latch mechanisms 108 and 110 are then moved into a closed position (e.g. snap shut) so that each latch member 112 and 114 is pulled tight in connection with respective flange portion 118 and 120. Consequently, the closure 106 is forced onto the outer wall of the duct 102 so as to form an airtight press-fit between the inner surface of the closure 106 and the outer wall of the duct 102. It is further understood that the fasteners may include any mechanism suitable to lockingly engage with a saddle portion 116 and/or its flange portions 118 and 120.

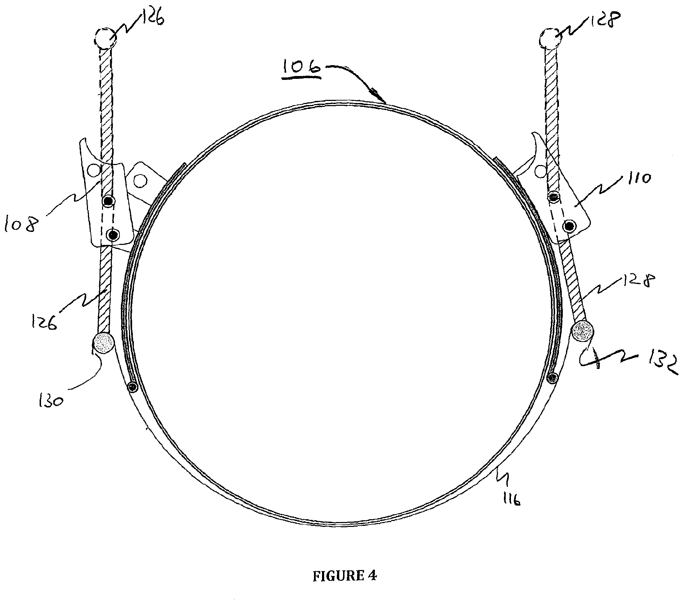

As shown in Figures 1 and 4, latch members 112, 114 (as well as alternative latch members 126, 128) are further adapted to be transformed into a grip when in an open position. In particular, latch members 112 and 114 (as well as alternative latch members 126, 128) are moveable about a pivot axis 109 of respective latch mechanism 108, 110 into an open position where further movement past the open position is prevented by a stop mechanism (not shown).

During use, each latch mechanism 108, 110 is opened so as to unlock respective latch member 112, 114 (as well as alternative latch members 126, 128) out of engagement with respective flange portion 118, 120, and then move each latch member 112, 114 (as well as alternative latch members 126, 128) into an open position, where both latch members 112, 114 (as well as alternative latch members 126, 128) can be gripped with one hand to move the closure 106 away from or onto the duct 102.

In this particular example, the airtight seal is formed simply by a metal-to-metal contact between the closure 106 and the outer wall of the duct 102. However, it is understood that an airtight seal may be formed between the closure 106 and outer wall of the duct 102 using any suitable material. Alternatively, a gasket or other seal (not shown) may be provided between the closure 106 and the outer wall of the duct 102 to improve the seal around the opening 104 even further.

As shown in Figures 2 and 3, end portions 122 and 124 of duct 102 are configured to fittingly engage with a ductwork system, i.e. by simply cutting out a section of the ductwork and replacing it with the duct member 100. For example, the end portions 122 and 124 may have an outer diameter that is smaller than the inner diameter of the ductwork allowing the end portions 122 and 124 to slide into respective portions of the ductwork.

The saddle portion 116 of the duct member 100 may simple be loosely placed around the outer wall of the duct 102 when fastening the closure 106 over the opening 104. However, alternatively, the saddle portion 116 may be permanently fixed to the outer wall of the duct 102, for example, by welding, gluing, riveting or any other means suitable.

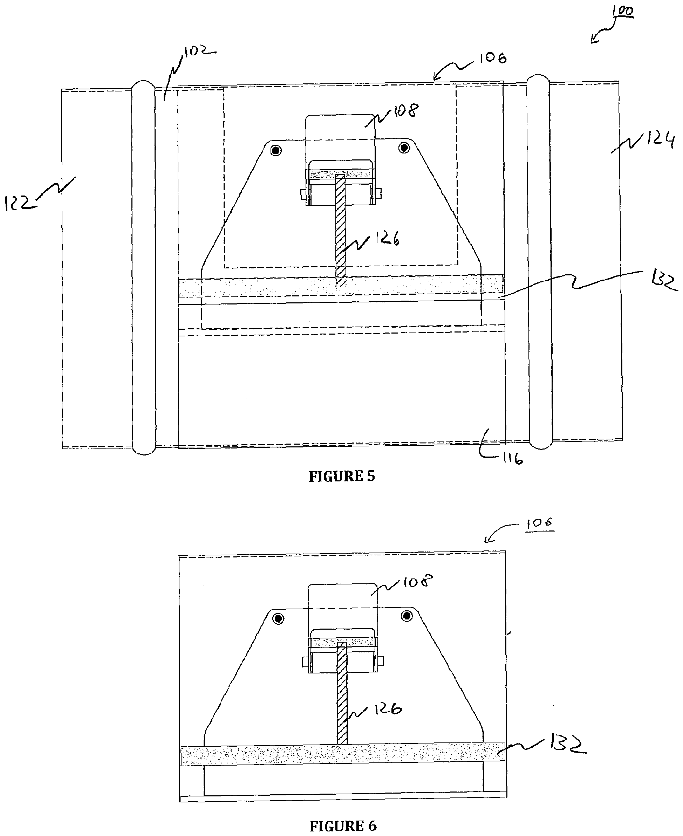

Figure 4, 5 and 6 show front and side views of the embodiment of the present invention, using alternative latch members 126 and 128, and flange portions 130 and 132, but identical latch mechanisms 108 and 110 to the embodiment shown in Figure 1. The latch members 126 and 128 depicted in dashed lines are shown in an open position. Latch mechanism 108 is depicted in an open position.

In a preferred example, a damper (not shown) is operatively installed into the passageway of the duct 102, wherein the damper housing is adapted to sealingly engage with the inner surface of the duct 102 and the closure 116 when in a closed position. In order to access the damper (not shown), the closure 116 is simply unlocked and detached from the duct 102. The damper (not shown) is operatively coupled to the closure 116 and adapted to sealingly engage with the inner surface of the duct 102 when the closure 116 is in its closed position. Therefore, in order to access the damper, the closure 116 is simply unlocked and detached from the duct 102, removing the damper (not shown) from the passageway and out of engagement with the inner surface of the duct 102. The closure 116 and attached damper can then be taken to a location where it could be easily serviced.

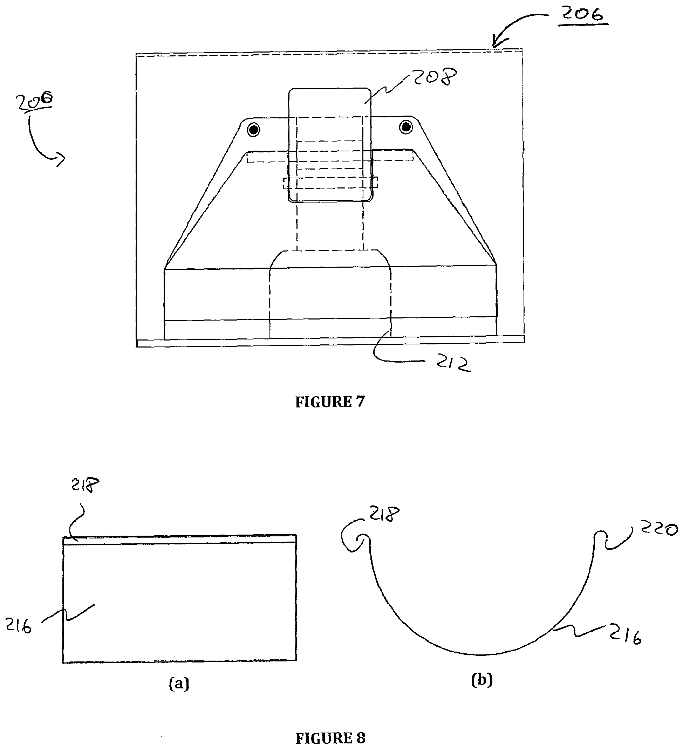

Figures 7 and 8 (a) and (b) show a second aspect of the present invention in the form of a re-usable and "stand-alone" closure assembly 200, comprising a closure 206 and saddle portion 216. Closure 206 and saddle portion 216 are identical or at least similar to the closure 106 and saddle portion 116 of the duct member 100 of the first aspect of the invention. During use, any access hole in a duct may be closed and sealed by simply positioning the saddle portion 216 on the outer wall of the duct opposite the access hole and positioning the closure 206 over the access hole. Latch members 212, 214 are then lockingly engaged with respective flange portions 218, 220 before closing latch mechanisms 208, 210 and sealing the access hole. The closure assembly 200 may be removed at any time (e.g. when the duct section is replaced) and re-used on any other duct having an access hole.

In a preferred example, the duct 102, closure 106, 206 and saddle portion 116, 216 may be made of sheet metal. However, any suitable metal or any other suitable material, or suitable combination of material may be used.

It will be appreciated by persons skilled in the art that the above embodiment has been described by way of example only and not in any limitative sense, and that various alterations and modifications are possible without departing from the scope of the invention as defined by the appended claims. In particular, it is understood by the person skilled in the art that the tubular wall may have any suitable cross section shape, such as, for example, circular, square, rectangular and any other shape that may be required for a particular application.

## Claims

1. A duct member (100), comprising:
a tubular wall defining a passageway between an upstream end portion and a downstream end portion of the tubular wall;
a damper adapted to be sealed within the passageway;
an opening (104) in the tubular wall between the upstream end portion and the downstream end portion, adapted to allow access for positioning the damper within the passageway, and;
a closure member, adapted to sealingly close the opening (104), wherein the closure member comprises at least two fasteners (108, 110) adapted to fasten the closure member to the tubular wall;
**characterised in that**:
the closure member is a detachable closure member (106) adapted to detach from the tubular wall;
wherein the damper is mounted on the detachable closure member (106) and is adapted to sealingly engage with an inner surface of the tubular wall and an inner surface of the detachable closure member (106) to seal the passageway when the detachable closure member (106) is in a closed position;
wherein the duct member (100) comprises a saddle portion (116) matingly engageable with the tubular wall at a location opposite the opening (104), and adapted to lockably cooperate with the fasteners (108, 110) of the detachable closure member (106); and
wherein the saddle portion (116) has first and second ends, each of the first and second ends having a respective flange portion (118, 120) adapted to engage with one of the first and second fasteners (108, 110) respectively.

2. A duct member according to claim 1, wherein each fastener (108, 110) comprises a latch member (112, 114, 126, 128) moveable between a closed position and an open position, and adapted to bias said detachable closure member (106) and saddle portion (116) towards each other when in said closed position.

3. A duct member according to claim 2, wherein the latch members (112, 114, 126, 128) are further adapted to provide a handle when in the open position.

4. A duct member according to any preceding claim, wherein the saddle portion (116) is permanently affixed to said tubular wall.

5. A duct member according to any one of claims 1-5, wherein the saddle portion (116) is adapted to fit around the tubular wall at the location opposite the opening (104).

6. A duct member as claimed in any preceding claim, wherein the detachable closure member (106) is removable from the tubular wall by moving the detachable closure member (106) away from the opening (104) in a direction that is perpendicular to a longitudinal axis of the tubular wall.

## Patentansprüche

1. Ein Luftleitungselement (100), das Folgendes beinhaltet:
eine rohrförmige Wand, die einen Durchgang zwischen einem stromaufwärtigen Endabschnitt und einem stromabwärtigen Endabschnitt der rohrförmigen Wand definiert;
eine Klappe, die angepasst ist, innerhalb des Durchgangs abgedichtet zu sein;
eine Öffnung (104) in der rohrförmigen Wand zwischen dem stromaufwärtigen Endabschnitt und dem stromabwärtigen Endabschnitt, die angepasst ist, Zugang zum Positionieren der Klappe innerhalb des Durchgangs zu erlauben, und;
ein Verschlusselement, das angepasst ist, die Öffnung (104) abdichtend zu verschließen, wobei das Verschlusselement mindestens zwei Befestigungsmittel (108, 110) beinhaltet, die angepasst sind, das Verschlusselement an der rohrförmigen Wand zu befestigen;
**dadurch gekennzeichnet, dass**:
das Verschlusselement ein abnehmbares Verschlusselement (106) ist, das angepasst ist, von der rohrförmigen Wand abgenommen zu werden;
wobei die Klappe an dem abnehmbaren Verschlusselement (106) montiert ist und angepasst ist, in eine Innenfläche der rohrförmigen Wand und eine Innenfläche des abnehmbaren Verschlusselements (106) abdichtend einzugreifen, um den Durchgang abzudichten, wenn das abnehmbare Verschlusselement (106) in einer geschlossenen Position ist;
wobei das Luftleitungselement (100) einen Sattelabschnitt (116) beinhaltet, der an einer der Öffnung (104) gegenüberliegenden Stelle in die rohrförmige Wand passend eingreifbar ist und der angepasst ist, mit den Befestigungsmitteln (108, 110) des abnehmbaren Verschlusselements (106) sperrend zu kooperieren; und
wobei der Sattelabschnitt (116) ein erstes und zweites Ende aufweist, wobei jedes des ersten und zweiten Endes einen jeweiligen Flanschabschnitt (118, 120) aufweist, der angepasst ist, in eines des ersten bzw. zweiten Befestigungsmittels (108, 110) einzugreifen.

2. Luftleitungselement gemäß Anspruch 1, wobei jedes Befestigungsmittel (108, 110) ein Riegelelement (112, 114, 126, 128) beinhaltet, das zwischen einer geschlossenen Position und einer offenen Position beweglich ist und das angepasst ist, das abnehmbare Verschlusselement (106) und den Sattelabschnitt (116) gegeneinander vorzuspannen, wenn es in der geschlossenen Position ist.

3. Luftleitungselement gemäß Anspruch 2, wobei die Riegelelemente (112, 114, 126, 128) ferner angepasst sind, einen Griff bereitzustellen, wenn sie in der offenen Position sind.

4. Luftleitungselement gemäß einem der vorhergehenden Ansprüche, wobei der Sattelabschnitt (116) dauerhaft an der rohrförmigen Wand fixiert ist.

5. Luftleitungselement gemäß einem der Ansprüche 1-5, wobei der Sattelabschnitt (116) angepasst ist, an der der Öffnung (104) gegenüberliegenden Stelle um die rohrförmige Wand zu passen.

6. Luftleitungselement gemäß einem der vorhergehenden Ansprüche, wobei das abnehmbare Verschlusselement (106) von der rohrförmigen Wand durch Bewegen des abnehmbaren Verschlusselements (106) weg von der Öffnung (104) in eine Richtung, die senkrecht zu einer Längsachse der rohrförmigen Wand ist, entfernbar ist.

## Revendications

1. Un élément de conduit (100), comprenant :
une paroi tubulaire définissant une voie de passage entre une partie d'extrémité amont et une partie d'extrémité aval de la paroi tubulaire ;
un registre conçu pour être scellé au sein de la voie de passage ;
une ouverture (104) dans la paroi tubulaire entre la partie d'extrémité amont et la partie d'extrémité aval, conçue pour permettre un accès pour le positionnement du registre au sein de la voie de passage, et ;
un élément de fermeture, conçu pour fermer de manière à sceller l'ouverture (104),
l'élément de fermeture comprenant au moins deux fixations (108, 110) conçues pour fixer l'élément de fermeture à la paroi tubulaire ;
**caractérisé en ce que** :
l'élément de fermeture est un élément de fermeture détachable (106) conçu pour être détaché de la paroi tubulaire ;
dans lequel le registre est monté sur l'élément de fermeture détachable (106) et est conçu pour se mettre en prise de manière à les sceller avec une surface interne de la paroi tubulaire et une surface interne de l'élément de fermeture détachable (106) pour sceller la voie de passage lorsque l'élément de fermeture détachable (106) est dans une position fermée ;
dans lequel l'élément de conduit (100) comprend une partie en forme de selle (116) pouvant se mettre en prise de manière appariée avec la paroi tubulaire au niveau d'un emplacement opposé à l'ouverture (104), et conçue pour coopérer de manière verrouillable avec les fixations (108, 110) de l'élément de fermeture détachable (106) ; et
dans lequel la partie en forme de selle (116) a des première et deuxième extrémités, chacune des première et deuxième extrémités ayant une partie formant bride respective (118, 120) conçue pour se mettre en prise avec l'une des première et deuxième fixations (108, 110) respectivement.

2. Un élément de conduit selon la revendication 1, dans lequel chaque fixation (108, 110) comprend un élément formant crochet (112, 114, 126, 128) pouvant être déplacé entre une position fermée et une position ouverte, et conçu pour décaler ledit élément de fermeture détachable (106) et ladite partie en forme de selle (116) l'un vers l'autre lorsqu'il est dans ladite position fermée.

3. Un élément de conduit selon la revendication 2, dans lequel les éléments formant crochets (112, 114, 126, 128) sont en outre conçus pour servir de poignée lorsqu'ils sont dans la position ouverte.

4. Un élément de conduit selon n'importe quelle revendication précédente, dans lequel la partie en forme de selle (116) est assujettie de manière permanente à ladite paroi tubulaire.

5. Un élément de conduit selon n'importe laquelle des revendications 1 à 5, dans lequel la partie en forme de selle (116) est conçue pour s'ajuster autour de la paroi tubulaire au niveau de l'emplacement opposé à l'ouverture (104).

6. Un élément de conduit tel que revendiqué dans n'importe quelle revendication précédente, dans lequel l'élément de fermeture détachable (106) peut être retiré de la paroi tubulaire en écartant l'élément de fermeture détachable (106) de l'ouverture (104) dans une direction qui est perpendiculaire à un axe longitudinal de la paroi tubulaire.
